Europäisches Patentamt

**European Patent Office**

**Office européen des brevets**

(19)

(11) Publication number: **0 055 938**

**A1**

(12) # EUROPEAN PATENT APPLICATION

(21) Application number: **81306180.1**

(22) Date of filing: **30.12.81**

(51) Int. Cl.³: **G 02 B 25/00**

(30) Priority: **02.01.81 GB 8100042**

(43) Date of publication of application:
**14.07.82 Bulletin 82/28**

(84) Designated Contracting States:
**AT BE CH DE FR IT LI LU NL SE**

(71) Applicant: **Andrews, Garry**
**22 Tyron Way**
**Sidcup Kent(GB)**

(72) Inventor: **Andrews, Garry**
**22 Tyron Way**
**Sidcup Kent(GB)**

(74) Representative: **Raynor, John et al,**
**W.H.Beck, Greener & Co 7 Stone Buildings Lincoln's Inn**
**London WC2A 3SZ(GB)**

(54) An optical magnifier.

(57) An optical magnifier, for example for hand-held use in reading print by the poorly-sighted, has a preferably simple positive lens (4) mounted at a spacing above a part-spherical lens such that the positive lens (1) is at a distance from the subject no greater than its focal length, the advantage being gained that the magnification obtained is the product of that of the two lenses but without the reduction in lens size field which would be experienced using a known simple or compound magnifier of comparable power, and hence giving a better field of view.

FIG. 1

EP 0 055 938 A1

Croydon Printing Company Ltd.

- 1 -

"An optical magnifier".

This invention relates to relatively simple optical magnifying devices, e.g. hand-held magnifiers and magnifiers often used by the poorly-sighted to assist in the reading of printed matter.

It is well known in the art of lens construction that the magnifying power of such devices is usually small, e.g of the order of 1X - 8X, and that increase of magnifying power necessarily entails a reduction of width of the lens and a consequent reduction of width of the field of view, especially if edge distortion is to be avoided. When higher magnifications are required, this is obtained by using a compound magnifier, that is, two or more magnifying lenses mounted together, the power then being their equivalent power. This results in even smaller magnifiers, the size reducing as the powers increase. As an illustration, the largest single-lens magnifier commonly available of 5X magnification has a diameter of 50 millimeters. If it is desired to have available a magnification of 10X, recourse must then be had to a compound lens constituted by an eye lens and an object glass, and the largest such compound magnifier commonly available has its eye lens with a diameter of 30 millimeters and its object lens with a diameter of 32 millimeters, so that whilst magnification is doubled, the size of the magnifier is much reduced.

In most instances, the larger the magnifier can be however, the better as the widest field of view is then obtained.

It is accordingly the object of the present invention to provide a multi-lens magnifier with which there is obtained an increase of magnification of the same order but with retention of the same larger size of lens as with a simple magnifier.

According to the present invention an optical magnifier comprises, considered in the direction from a subject to a viewer:

(i) a part-spherical lens having, when in use, its plane base towards the subject and its part-spherical surface towards the viewer,

(ii) a simple or compound positive lens disposed when in use substantially in axial alignment between the part-spherical lens and the viewer at a spacing from the subject not exceeding its focal length measured from the back surface of the positive lens, the positive lens preferably having a field of view not more than, and most preferably less than, the field of view

(iii) of the part-spherical lens, and support means maintaining the part-spherical lens and the positive lens at the required spacing.

As used in this specification, the term "part-spherical lens" means a lens of glass or of plastics material having a part-spherical curved face, and an axially-spaced plane face.

In general, the best form for the part-spherical lens will be one that is in excess of a true hemisphere to give maximum magnification, subject to being substantially without distortion, whilst maintaining the field of view at least-equal to, and preferably more than that of the positive lens. Thus, the part-spherical lens may range from one quarter of a sphere to nine-tenths of a sphere. Likewise, the part-spherical lens need not necessarily be truly spherical but may be slightly flattened at the pole or otherwise varied from spherical within the limits permitted by acceptable distortion.

A preferred range of size is that a normal drawn from the centre of the plane face to the curved face is within the range "r" to r + 25%, where "r" is the radius of the curved face. Within the term are included lenses in which plane lateral faces have been provided, e.g. to result in a lens which is substantially "squared off" in plan.

The term "field" as used herein indicates useful field of view excluding peripheral portions having substantial distortion, and where the part-spherical lens is "squared off" in the manner referred to, the positive lens may be similarly shaped.

The positive lens may be of glass or plastics material and made in any known form, e.g. it may be a double-convex lens. It would also be possible in some instances to achieve the required power by using more than one lens in combination to achieve the desired resultant power. In a convenient practical form given by way of non-limiting example, the part-spherical lens has a magnification substantially without distortion of about 2X, and if the 5X positive lens previously mentioned is used in conjunction there is then provided a 10X magnifier of eye lens diameter 50 mm. As the extreme upper limit of magnification of the magnifier may not be essential, it is possible to sacrifice a small amount of magnification by using the positive lens at somewhat less than its focal length from the subject, say so as to obtain a respective magnification of about 4X, and a resultant combined power of 2X : 4X = 8X.

The part-spherical lens may be used with its plane face in contact with the subject, or it may be used with its plane face slightly spaced from the subject, within limits governed by the extent to which peripheral distortion becomes unacceptable. In a preferred form, the magnifier includes means for supporting the part-spherical lens at a spacing, when in use, from the subject matter at which negligible edge distortion is apparent.

In order that the nature of the invention may be readily ascertained, an embodiment of magnifier in accordance therewith is hereinafter particularly described with reference to the accompanying drawings, wherein:

Fig. 1 is a central vertical section of the magnifier;

Fig. 2 is a central vertical section of a modification of the magnifier of Fig. 1;

Fig. 3 is a plan view of the modified magnifier of Fig. 2;

Fig. 4 is a diagram to show the paths of rays of light in the magnifier.

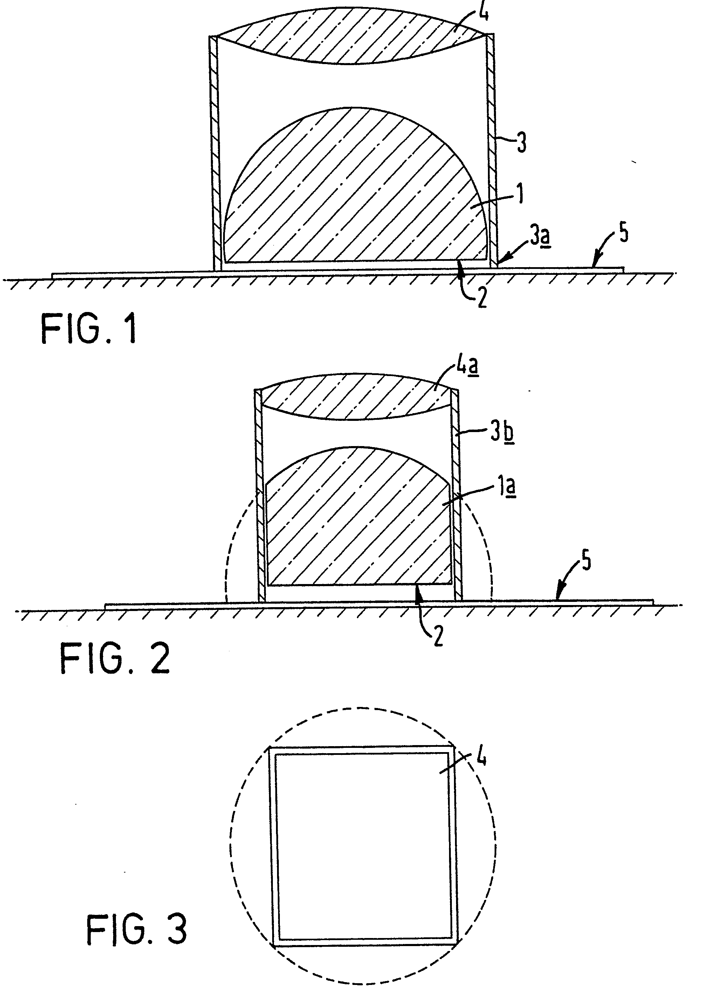

Referring to Fig. 1, the magnifier comprises a part-spherical lens 1 having a chordal plane face 2 which is presented at its underside towards the subject to be viewed. The term "part-spherical" is applied somewhat loosely in practice and includes lenses which are true hemispheres but is more usually applied to lenses which are slightly more than hemispheres in which the face 2 is a chordal plane rather than diametral plane.

The lens 1 is secured within a housing 3 which is here shown as a simple envelope for supporting symmetrically above the lens 1 a second lens 4. It will be appreciated that the housing can take any form which will not obscure the field of view.

It is possible, without deterioration of its magnifying effect, to use a part-spherical lens at a small spacing above the subject matter, rather than actually in contact with the subject matter, e.g. a printed page. The limit of lifting off is determined in practice by distortion affecting the image, although magnification increases. This spacing may be desirable in order to avoid risk of scratching or soiling of the plane face 2, especially when the lens is of plastics material, and the housing 3 can therefore advantageously include spacer means 3a for the purpose of supporting the lens 1 above the subject matter.

The lens 4 may be any positive lens, or a combination of lenses, but a single lens is preferred for simplicity. It is disposed in the housing 3 so as to be at its focal length from the subject matter 5 . The distance above the subject matter may be less than the focal length, but the magnification obtained will accordingly be less.

It can be shown by optical theory that when an object is at the centre of curvature of a dense medium bounded by air, the image is also at the centre of curvature and of a magnification governed by the refractive index of the medium. Hence a part spherical lens which is an exact hemisphere, when standing with its flat surface on an object, will magnify the object by an amount equal to the refractive index of the lens.

With a part spherical lens that is less than an exact hemisphere the magnification is a number less than the refractive index of the lens and decreases as the size of the lens reduces. With a part spherical lens that is more than an exact hemisphere the magnification is a number more than the refractive index of the lens and increases as the size of the lens increases. The refractive indices of various forms of glass and plastics materials used in optics vary but in general do not exceed about 1.8, the higher the refractive index of the part spherical lens the greater the magnification. With a part spherical lens a little in excess of an exact hemisphere to an amount before distortion occurs, the magnification is approximately 2X although this varies with the refractive index, being less with the lower refractive indices.

If the upper lens 4 is made, for example, the commercially-available 5X double-convex magnifier having a diameter of 50 millimeters and it is used at slightly less than its maximum focal distance so as to have a magnification of 4X, the combination magnifier as illustrated has a magnification of 2 (approximately) X 4 = 8.(approximately), which is almost double that of the single-lens magnifier but nevertheless retains its 50 millimeter lens size. The placing of the part-spherical lens 1 between the positive lens 4 and the subject matter 5 does not affect the focal length of the positive lens 4 which should be placed at or slightly below its focal length spacing from the subject matter.

Referring now to Fig. 2, there is shown a similar illustration of a construction in which the part-spherical lens 1a has been "squared-off" in a manner usual in the art to provide plane lateral faces. The positive lens can be of any convenient practical shape, e.g. round, rectangular, square, etc., the power tending to govern what will be the most practical shape. The shaping of the hemisphere would need to be adapted accordingly, the edges being squared off as desired, see for example Fig. 3. The housing 3b supports the upper lens 4a which also has its peripheral portion cut away in a manner usual in the art.

Fig. 3 shows a plan view of the modified structure of Fig. 2, in which it is seen that the housing is a tube of square section, and the upper lens is also made of square peripheral shaping.

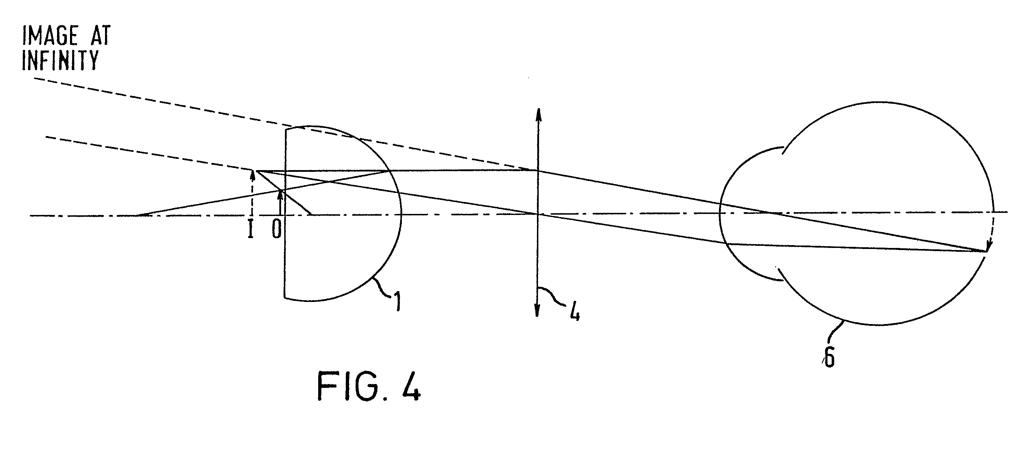

Fig. 4 is an optical diagram to show the paths of rays of light in such a lens structure.

In figure 4, O represents the object, 6 the eye, and I the image formed.

The improved magnifier of this invention has the advantage that, using uncomplicated lenses, the magnification is the product of the individual magnifications of the two components but without the reduction of the lens size which is obtained with a single lens or compound magnifier of comparable power.

CLAIMS

1. An optical magnifier comprising an objective lens (1), a viewing lens (4), and a support (3) for the objective lens and the viewing lens, the objective lens having a part-spherical curved face and a plane face (2) and the viewing lens being a single or compound positive lens system, the support being such as to support the objective lens above subject matter (5) to be magnified, with its plane face (2) directed towards the said matter (5) and its part-spherical face directed towards the viewing lens (4), and to support the viewing lens (4) at a distance from the subject (5) not exceeding its focal length, measured from the back surface of the positive lens (4).

2. An optical magnifier comprising, considered in the direction from a subject to a viewer, a lens (1) having a part-spherical curved face, and a plane face (2) axially spaced therefrom and having when in use its plane base (2) towards the subject (5) and its part-spherical surface towards the viewer, a single or compound positive lens system (4) disposed when in use substantially in axial alignment between the part-spherical lens (1) and the viewer at a spacing from the subject not exceeding its focal length measured from the back surface of the positive lens (4), the positive lens (4) having a field of view not more than the field of view of the part spherical lens (1), and support means (3) maintaining the part-spherical lens and the positive lens at the required spacing.

3. An optical magnifier, as claimed in Claim 1 or Claim 2, wherein the positive lens (4) is a double-convex simple lens.

4. An optical magnifier, as claimed in any one of Claims 1 to 3, wherein the objective lens (1) has a magnification substantially without distortion of about 2X, and wherein the positive lens (4) has a maximum magnification substantially without distortion of about 5X.

5. An optical magnifier, as claimed in any one of the preceding Claims, wherein the support (3) is such as to support the viewing lens (4) at a distance of less than its focal length from the subject matter.

6. An optical magnifier, as claimed in Claim 2, including means for supporting the objective lens (1) at a spacing from the subject at which negligible edge distortion is apparent.

7. A method of magnifying an object which method comprises positioning a magnifier as claimed in any one of the preceding Claims above the object with the plane face of the objective lens nearest the object, and viewing a magnified image of the object via the viewing lens.

FIG. 1

FIG. 2

FIG. 3

FIG. 4

IMAGE AT INFINITY

Application number

EP 81 30 6180.1

**European Patent Office**

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | US – A – 4 099 851 (G. RETHORE)<br>* Fig. 5 * | 1,2,7 | G 02 B 25/00 |
| Y | CH – A – 284 487 (P. SEITZ)<br>* Fig. 1 * | 1 | |
| Y | DE – U – 1 658 795 (H. KILFITT)<br>* claim 4 * | 1 | |
| A | DE – U – 1 874 935 (R. BREUNING)<br>* page 2, middle * | 4 | **TECHNICAL FIELDS SEARCHED (Int.Cl. 3)** |
| A | DE – C – 691 697 (E. BUSCH AG)<br>* lines 75 to 82 * | | G 02 B 25/00 |
| A | DE – U – 1 696 530 (BÖHLER & CO.)<br>* whole document * | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 31-03-1982 | FUCHS |

EPO Form 1503.1 06.78